Europäisches Patentamt

European Patent Office

Office européen des brevets

(11) Veröffentlichungsnummer: **0 309 747**
**A2**

## (12) EUROPÄISCHE PATENTANMELDUNG

(21) Anmeldenummer: 88114037.0

(22) Anmeldetag: 29.08.88

(51) Int. Cl.⁴: **B21D 53/26 , B60B 21/10**

(30) Priorität: 02.10.87 DE 3733348

(43) Veröffentlichungstag der Anmeldung:
05.04.89 Patentblatt 89/14

(84) Benannte Vertragsstaaten:
**AT BE CH DE ES FR GB GR IT LI LU NL SE**

(71) Anmelder: **VEREINIGTE ALUMINIUM-WERKE AKTIENGESELLSCHAFT**
**Berlin - Bonn Postfach 2468**
**Georg-von-Boeselager-Strasse 25**
**D-5300 Bonn 1(DE)**

(72) Erfinder: **Ostermann, Friedrich**
**Kirschenstrasse 17**
**D-5309 Meckenheim-Merl(DE)**
Erfinder: **Plath, Hans-Heinrich**
**Rosenthalstrasse 6**
**D-5216 Niederkassel-Mondorf(DE)**
Erfinder: **Griep, Winfried**
**Kirchfeldstrasse 1**
**D-5300 Bonn 3(DE)**

(54) **Verfahren und Vorrichtung zur Herstellung eines Leichtmetall-Fahrzeugrades.**

(57) 2.1. Leichtmetall-Fahrzeugräder mit guren Notlaufeingenschaften im Pannenfall besitzen radial nach innen gerichtete Felgenhörner. Die hinterschnittenen Felgenhörner müssen nach dem Gießen oder Schmieden der Felgenvorform in einem zusätzlichen Verfahrensschritt angeformt werden. Ist der Freiraum zwischen Felgenhorn und Radscheibe sehr klein, können Formstützwerkzeuge nicht eingesetzt werden. Bei der spanenden Bearbeitung von Felgenvorformen, die im Bereich der Felgenhörner keine Hinterschneidung aufweisen, entsteht ein erheblicher Materialabfall. Durch das neue Verfahren und die entsprechende Vorrichtung soll der Materialabfall deutlich verringert werden, bei gleichzeitig hoher Formgenauigkeit des Endproduktes.

2.2. Nach dem vorgeschlagenen Verfahren wird zunächst eine Felgenvorform (2) hergestellt, wobei der Bereich zwischen dem Übergang vom Tiefbett zur Pannenlauffläche und der Außenkante der Felge so ausgebildet wird, daß die radial inneren Flächen (7) dieses Bereiches achsparallel verlaufen und sich der Querschnitt dieses Bereiches nach außen hin keulenförmig verdickt. Diese keulenförmige Verdickung (3) wird mit der erfindungsgemäßen Vorrichtung radial nach innen gestaucht, so daß der äußere Felgendurchmesser vom Ende des Tiefbettes axial nach außen hin abnimmt. Aus dem keulenförmig verdickten Material wird die Hinterschneidung für die Reifensitzflächen (8) spanend herausgearbeitet.

2.3. Herstellung von Leichtmetall-Fahrzeugrädern.

## Verfahren und Vorrichtung zur Herstellung eines Leichtmetall-Fahrzeugrades

Die vorliegende Erfindung betrifft ein Verfahren und eine Vorrichtung zur Herstellung eines Leichtmetall-Fahrzeugrades, das auf beiden Seiten des Felgentiefbettes eine Pannenlauffläche aufweist, wobei die Felgenhörner radial nach innen gerichtet sind und die Felge neben diesen Felgenhörnern am radial inneren Umfang Sitzflächen für den Reifen aufweist, ausgehend von einer Felgenvorform, die durch Kalt- und/oder Warmverformung mit anschließender spanender Bearbeitung zur fertigen Felge verarbeitet wird.

Fahrzeugräder dieser Art sind grundsätzlich bekannt, z.B. aus DE-OS 32 44 046. Sie besitzen sehr gute Notlaufeigenschaften im Pannenfall. Durch die radial nach innen gerichteten Felgenhörner stützt sich die Felge im drucklosen Zustand des Reifens flächig auf der Reifeninnenseite ab. Diese Fläche der Felge wird als Pannenlauffläche bezeichnet.

Felgenvorformen für derartige Leichtmetallräder können durch Gießen oder Schmieden hergestellt werden. Die hinterschnittenen Felgenhörner müssen in beiden Fällen in einem zusätzlichen Verfahrensschritt angeformt werden. Dabei ergeben sich Probleme insbesondere dann, wenn der Freiraum zwischen Felgenhorn und Radscheibe sehr klein ist. In diesem Fall können in diesem Freiraum wirkende Formstützwerkzeuge zum Abstützen des Felgenhorns auch in klappbarer Ausführung nicht verwendet werden. Wird die Felgenvorform so hergestellt, daß sie auf der Außenseite bereits die fertige Kontur der Pannenlauffläche aufweist und gleichzeitig die radial inneren Flächen achsparallel verlaufen (ohne Hinterschneidungen), so entsteht bei der spanenden Bearbeitung der Reifensitzflächen ein erheblicher Materialabfall in Form von Spänen.

Aufgabe der vorliegenden Erfindung ist es daher, die Herstellung eines Leichtmetall-Fahrzeugrades der eingangs genannten Art in möglichst einfachen Verfahrensschritten mit hoher Formgenauigkeit des Endproduktes bei geringem Materialabfall durch spanende Bearbeitung zu ermöglichen. Weiterhin soll eine einfache Vorrichtung zur Durchführung des Verfahrens angegeben werden.

Diese Aufgabe wird erfindungsgemäß durch die kennzeichnenden Merkmale in den Ansprüchen gelöst.

Dazu wird zunächst eine Felgenvorform hergestellt, wobei der Bereich zwischen dem Übergang vom Tiefbett zur Pannenlauffläche und der Aussenkante der Felge so ausgebildet wird, daß die radial inneren Flächen dieses Bereiches achsparallel verlaufen und sich der Querschnitt dieses Bereiches nach außen hin keulenförmig verdickt. Diese keulenförmige Verdickung wird mit der erfindungsgemäßen Vorrichtung radial nach innen gestaucht, sodaß der äußere Felgendurchmesser vom Ende des Tiefbettes axial nach außen hin abnimmt. Aus dem keulenförmig verdickten Material wird die Hinterschneidung für die Reifensitzflächen spanend herausgearbeitet.

Die erfindungsgemäße Vorrichtung zur Durchführung des Formstauchvorganges besteht im wesentlichen aus einem oberen und unteren Stauchring. Das Werkstück wird in dieses Werkzeug eingelegt. Die Stauchringe werden dann zusammengefahren. Durch einen Stütz- und Zentrierring, der formschlüssig in das Tiefbett eingreift, werden die Tiefbettflanken abgestützt und die Felgenvorform im Werkzeug zentriert. Gleichzeitig kann die Felgenvorform über einen Bolzen im Nabenbereich zusätzlich zentriert werden.

Der Vorteil des erfindungsgemäßen Verfahrens liegt darin, daß in den üblichen Verfahrensgang lediglich ein einfacher Verformungsschritt eingefügt wird. Gleichzeitig ist der Materialabfall durch spanende Bearbeitung sehr gering. Durch kalibrierte Führung der Stauchringe und Zentrierung der Felgenvorform kann eine hohe Formgenauigkeit der Felge erzielt werden.

Das erfindungsgemäße Verfahren und die Vorrichtung zur Durchführung des Verfahrens wird nachfolgend an den in den Zeichnungen dargestellten Ausführungsbeispielen näher erläutert.

Es zeigen

Fig. 1 a) die Felgenvorform,

1 b) die Felge nach dem Formstauchen,

1 c) die fertige Felge nach der spanenden Bearbeitung,

Fig. 2 die im Werkzeug eingelegte Felgenvorform zu Beginn des Formstauchens,

Fig. 3 die Felge im vollständig geschlossenen Werkzeug,

Fig. 4 den Querschnitt eines Stauchringes, und

Fig. 5 den Teilquerschnitt eines Stütz- und Zentrierringes für die Felgenvorform.

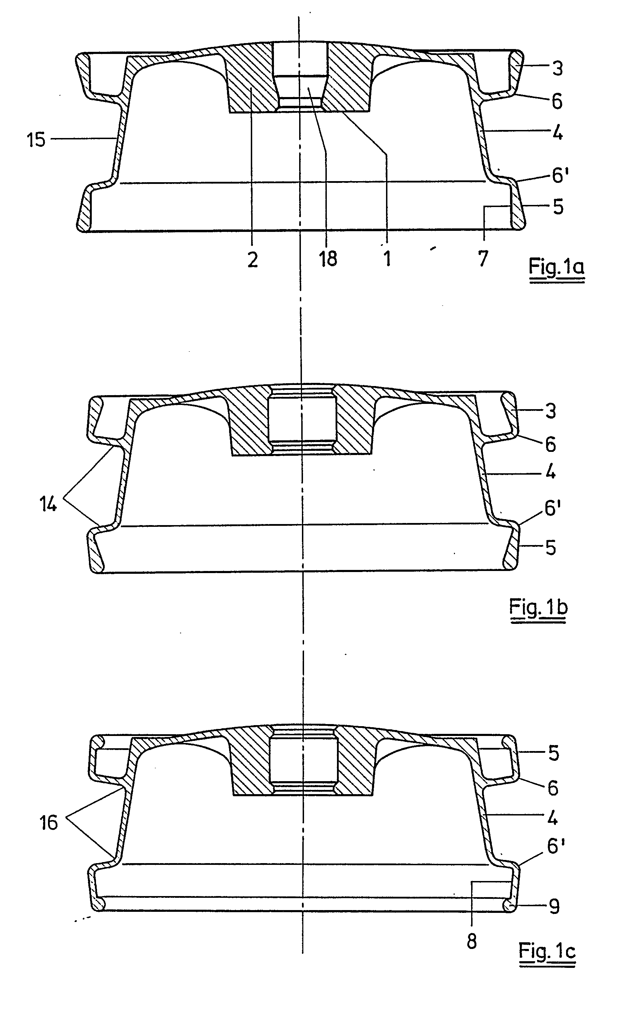

In Fig. 1a) ist die Felgenvorform 2 dargestellt. Die Felgenvorform 2 weist einen Felgenbereich mit einer axial nach außen gerichteten keulenförmigen Verdickung 3 auf. Diese keulenförmige Verdickung 3 wird außen von der Pannenlauffläche 5 und innen von einer von einer achsparallelen Fläche 7 begrenzt. Die keulenförmige Verdickung ist so bemessen, daß bei der späteren spanenden Bearbeitung der Hinterschneidung für die Reifensitzfläche 8 das minimal notwendige Material zur Ausbildung des Felgenhorns 9 zur Verfügung steht.

Fig. 1b) zeigt die Felge nach dem Formstauchen. Hierbei wird die keulenförmige Verdickung 3 so weit radial nach innen gestaucht, daß die Pannenlauffläche 5 vom Tiefbett 4 bis zur Außenkante der Felge in einem Winkel von 1 bis 10 Grad, vorzugsweise ca. 5 Grad, zur Rotationsachse der Felge hin abfällt.

In Fig. 1c) ist die Endgestalt der Felge nach der spanenden Bearbeitung zu erkennen. Die spanende Bearbeitung der Reifensitzfläche 8 erfolgt im Anschluß an das Formstauchen in der Weise, daß Pannenlauffläche 5 und Reifensitzfläche 8 parallel oder nahezu parallel verlaufen und das nach innen weisende Felgenhorn 9 entsteht.

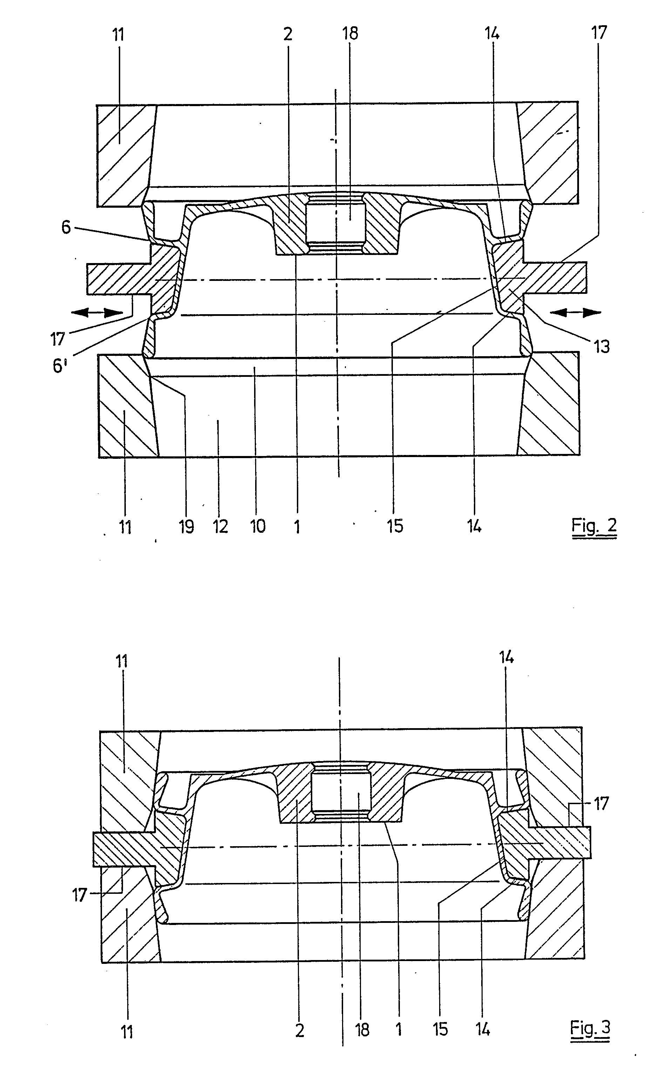

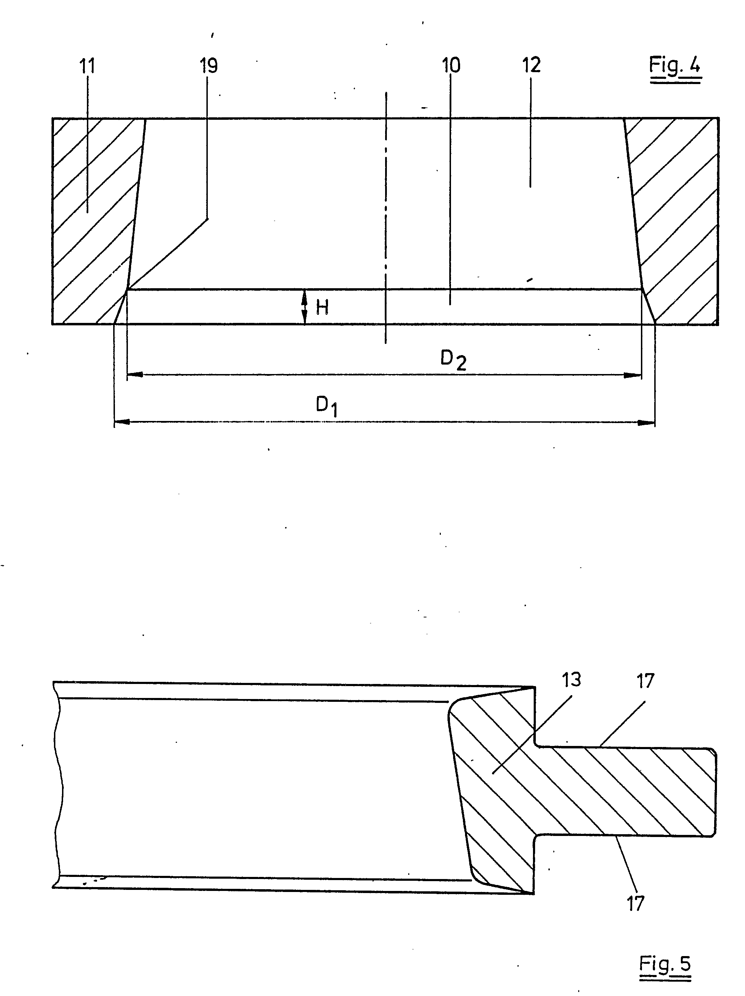

Die Fig. 2 und 3 zeigen den Ablauf des Formstauchvorgangs, wobei sich das Werkzeug mit eingelegter Felgenvorform 2 nach Fig. 2 in der Ausgangsposition (offen), nach Fig. 3 in der Endposition (vollständig geschlossen) befindet. Das Werkzeug besteht im wesentlichen aus dem oberen und dem unteren Stauchring 11. Der Querschnitt eines solchen Stauchringes 11 ist in Fig. 4 dargestellt. Die Öffnung im Zentrum des Stauchringes 11 ist trichterförmig ausgebildet, wobei zwei konzentrische, kegelstumpfförmige Bohrungen 10,12 mit unterschiedlichen Öffnungswinkeln ineinander übergehen. Der Durchmesser $D_1$ der Bohrung 10 an der Werkstückeintrittsseite des Stauchringes 11 ist dabei geringfügig größer oder gleich dem maximalen Außendurchmesser der Felgenvorform 2. Am Übergang 19 der Bohrung 10 auf die Bohrung 12 ist der Innendurchmesser $D_2$ des Stauchringes 11 geringfügig größer oder gleich dem Durchmesser der Felgenvorform am Übergang 6 des Tiefbettes 4 zur Pannenlauffläche 5. Der Öffnungswinkel der Bohrung 12 liegt zwischen 2 und 24 Grad, vorzugsweise bei etwa 12 Grad. Er sollte um 2 bis 4 Grad über dem doppelten Betrag des gewünschten Winkels zwischen Pannenlauffläche 5 und der Rotationsachse der Felge gewählt werden, da das Werkstück bei Entlastung um diesen Betrag zurückfedert.

Zum Abstützen und Zentrieren der Felgenvorform 2 im Werkzeug ist ein Stütz- und Zentrierring 13 (Fig. 2,3 u. 5) notwendig. Er ist durch achsparallele Schnitte in mehrere, vorzugsweise 3 Segmente geteilt. In Arbeitsstellung des Stütz- und Zentrierringes 13 greifen die Segmente formschlüssig in das Tiefbett 4 der Felgenvorform 2 ein. Die Segmente liegen dabei am Tiefbettgrund 15 und den über die Radien 16 angrenzenden Tiefbettflanken 14 an. Sie bilden einen weitgehend geschlossenen Ring um das Felgentiefbett 4.

In bevorzugter Ausführungsform weisen die Segmente des Stütz-und Zentrierringes 13 Anschlagflächen 17 auf, an denen die Stauchringe 11 des Werkzeuges im geschlossenen Zustand anliegen. Die Höhe H der flacheren Bohrung 10 an der Werkstückeintrittsseite der Stauchringe 11 muß in diesem Fall kleiner oder gleich dem lotrechten Abstand zwischen der Anschlagfläche 17 des Stütz- und Zentrierringes 13 und dem Übergang 6 vom Tiefbett 4 zur Pannenlauffläche 5 sein, damit das Werkzeug vollständig geschlossen werden kann.

Das Einbringen der Segmente des Stütz- und Zentrierringes 13 in das Tiefbett der Felgenvorform erfolgt mit üblichen hydraulischen oder pneumatischen Vorrichtungen.

Gleichzeitig kann eine Zentrierung des Werkstückes dadurch erfolgen, daß die Felgenvorform 2 mit der Anlagefläche 1 des Befestigungsflansches und der Innenfläche der Bohrung 18 an einem Zentrierbolzen anliegt und in dieser Position fixiert ist.

Als Ausgangsmaterial für die Herstellung geschmiedeter Fahrzeugräder der eingangs genannten Art eignen sich Aluminiumknetlegierungen. Bevorzugt eingesetzt werden Legierungen des Typs AlMgSi, wie z.B. AlMgSi1, oder Legierungen des Typs AlMgMn. Zur Herstellung der Räder durch Gießen können Aluminiumgußlegierungen des Typs AlSiMg, wie z.B. AlSi7Mg oder AlSi11Mg verwendet werden.

## Ansprüche

1. Verfahren zur Herstellung eines Leichtmetall-Fahrzeugrades, das auf beiden Seiten des Felgentiefbettes eine Pannenlauffläche aufweist, wobei die Felgenhörner radial nach innen gerichtet sind und die Felge neben diesen Felgenhörnern am radial inneren Umfang Sitzflächen für den Reifen aufweist, ausgehend von einer Felgenvorform, die durch Kalt- und/oder Warmumformung mit anschließender spanender Bearbeitung zur fertigen Felge verarbeitet wird, dadurch gekennzeichnet, daß

a) die Felgenvorform (2) einen Felgenbereich mit einer axial nach außen gerichteten keulenförmigen Verdickung (3) aufweist, die innen von einer achsparallelen Fläche (7) und außen von der Pannenlauffläche (5) begrenzt wird,

b) die keulenförmige Verdickung (3) durch einen Formstauchvorgang radial nach innen gedrückt wird, und

c) aus der keulenförmigen Verdickung (3) am radial inneren Umfang eine Hinterschneidung für die Reifensitzfläche (8) spanend herausgearbeitet wird.

2. Verfahren nach Anspruch 1, dadurch gekennzeichnet, daß die Felgenvorform (2) aus geschmiedeten und drückgewalzten Aluminiumknetlegierungen des Typs AlMgSi oder des Typs AlMgMn besteht.

3. Verfahren nach Anspruch 1, dadurch gekennzeichnet, daß die Felgenvorform (2) als Gußstück aus einer Aluminiumgußlegierung des Typs AlSiMg vorliegt.

4. Verfahren nach einem der vorhergehenden Ansprüche, dadurch gekennzeichnet, daß die keulenförmige Verdickung (3) in einem Winkel von ·1 bis 10 Grad, vorzugsweise ca. 5 Grad, gemessen zwischen der Pannenlauffläche (5) und der Rotationsachse, gestaucht wird.

5. Verfahren nach einem der vorhergehenden Ansprüche, dadurch gekennzeichnet, daß die Felgenvorform (2) während des Stauchvorganges im Nabenbereich zentriert wird.

6. Vorrichtung zur Durchführung des Verfahrens nach Anspruch 1, dadurch gekennzeichnet, daß die Vorrichtung zur Durchführung des Formstauchvorganges zwei Stauchringe (11) aufweist, die gegen die Enden der keulenförmigen Verdikkungen (3) der Felgenvorform andrückbar sind, wobei in den Stauchringen (11) zwei ineinander übergehende konzentrische, kegelstumpfförmige Bohrungen (10,12) mit, von der Werkstückseintrittsseite gesehen, zunächst großem und anschließend kleinem Öffnungswinkel angeordnet sind.

7. Vorrichtung nach Anspruch 6, dadurch gekennzeichnet, daß der Durchmesser ($D_1$) der Bohrung (10) an der Eintrittsseite des Werkstückes geringfügig größer oder gleich dem maximalen Aussendurchmesser der Felgenvorform (2) und der Durchmesser ($D_2$) am Übergang (19) der Bohrung (10) auf die Bohrung (12) geringfügig größer oder gleich dem Durchmesser der Felgenvorform (2) am Übergang (6) vom Tiefbett (4) zur Pannenlauffläche (5) ist.

8. Vorrichtung nach Anspruch 6 oder 7, dadurch gekennzeichnet, daß der Öffnungswinkel der Bohrung (12) in den Stauchringen (11) 2 bis 24 Grad, vorzugsweise 12 Grad beträgt.

9. Vorrichtung nach einem der Ansprüche 6 bis 8, dadurch gekennzeichnet, daß die Höhe (H) der Bohrung (10) in den Stauchringen (11) kleiner oder gleich dem halben axialen Abstand zwischen den einander gegenüberliegenden Übergängen (6,6 ) vom Tiefbett (4) zur Pannenlauffläche (5) ist.

10. Vorrichtung nach einem der Ansprüche 6 bis 9, dadurch gekennzeichnet, daß oberer und unterer Stauchring (11) kalibriert zueinander geführt sind.

11. Vorrichtung nach einem der Ansprüche 6 bis 10, dadurch gekennzeichnet, daß ein in axialer Richtung geteilter Stütz-und Zentrierring (13), bestehend aus mindestens 2 Segmenten, formschlüssig in das Tiefbett (4) der Felgenvorform (2) eingreift.

12. Vorrichtung nach Anspruch 11, dadurch gekennzeichnet, daß der Stütz- und Zentrierring (13) aus 3 Segmenten besteht.

13. Vorrichtung nach Anspruch 11 oder 12, dadurch gekennzeichnet, daß der Stütz- und Zentrierring (13) Anschlagflächen (17) für den oberen und unteren Stauchring (11) aufweist.

14. Vorrichtung nach einem der Ansprüche 11 bis 13, dadurch gekennzeichnet, daß die einzelnen Segmente des Stütz- und Zentrierringes (13) in Arbeitsstellung einen weitgehend geschlossenen Ring bilden.

Fig. 1a

Fig. 1b

Fig. 1c

Fig. 2

Fig. 3

11    19                    10    12                Fig. 4

H

D₂

D₁

13    17

17

Fig. 5